Europäisches Patentamt

European Patent Office

Office européen des brevets

(19)

(11) Publication number: **0 035 806**
**B1**

# EUROPEAN PATENT SPECIFICATION

(45) Date of publication of patent specification: **12.09.84**

(21) Application number: **81200158.4**

(22) Date of filing: **10.02.81**

(51) Int. Cl.³: **F 16 H 37/02**

(54) **A drive unit for a frontwheel driven car, provided with an infinitely variable belt drive.**

(30) Priority: **29.02.80 NL 8001236**

(43) Date of publication of application:
**16.09.81 Bulletin 81/37**

(45) Publication of the grant of the patent:
**12.09.84 Bulletin 84/37**

(84) Designated Contracting States:
**AT BE CH LI LU SE**

(56) References cited:
**DE-A-2 619 898**
**DE-A-2 621 682**
**DE-A-2 758 905**
**GB-A-1 558 726**
**US-A-4 125 037**

(73) Proprietor: **Van Doorne's Transmissie B.V.**
**Dr. Hub van Doorneweg 120 Postbus 500**
**NL-5026 RA Tilburg (NL)**

(72) Inventor: **Van der Veen, Siebren Carl**
**Sterrenlaan 144**
**NL-5505 AL Veldhoven (NL)**

(74) Representative: **Louet Feisser, Arnold Abraham**
**Alfred**
**Postbus 500**
**NL-5000 AM Tilburg (NL)**

Courier Press, Leamington Spa, England.

## Description

The invention relates to a drive unit for a frontwheel driven car, provided with an engine having a driven output shaft which is positioned coaxially in respect of the primary (driving) pulley of an infinitely variable belt drive, the secondary (driven) pulley of said infinitely variable belt drive being connected through a speed reduction gear and a differential unit to two output shafts being positioned substantially in line in respect of each other and parallel to the driven output shaft of the engine.

Such a drive unit is described in U.S. patent 4,125,037. According to this publication the crankshaft of the engine is connected through a hydraulic torque converter to the primary pulley of the infinitely variable belt drive. The secondary pulley is connected through a forward/reverse shifting mechanism, a speed reduction mechanism and a differential unit to the two output shafts which drive the wheels of the motor vehicle. Such drive unit is to be installed in the front of the car, whereby the engine is positioned transversely. In such configuration the available space for the drive unit is very limited.

A drawback of the prior art drive units of the described type is the relatively large space they occupy, which is in particular detrimental for a universal applicability in several types of frontwheel driven vehicles.

It is the object of the invention to provide a drive unit of the described type, which is highly compact and hence well applicable in several types of frontwheel driven vehicles and due to its compactness is also lighter than the known drive units.

To this effect according to the invention, the drive unit is characterized in that the speed reduction gearing and the differential unit are positioned coaxially in respect of the secondary pulley with one of the output shafts extending through the secondary pulley, and in that a speed reversing mechanism is connected to the driven output shaft by a shaft extending through the primary pulley, the output of said reversing mechanism being connected to the primary pulley. This constructive feature results in a compact build-up of the complete drive unit, whereby the drive unit substantially comprises two parallel axes that coincide with the axes of the two pulleys. The first axis forms the centerline of the engine (driven output shaft), the primary pulley and the speed reversing mechanism, and the second axis forms the centerline of the secondary pulley, the output shafts and the differential. Thereby the belt drive integrates two functions of a transmission in the frontwheel drive configuration, firstly the ratio change and secondly the required power transfer between parallel axis. Although the belt itself therefore may be somewhat longer than necessary for the ratio change, the total size of the transmission will be smaller.

Other components such as a clutch may be applied selectively concentric with one of the two axes.

It is noted that the British patent specification no. 1,558,726 describes a separate belt drive to be installed between the rear wheels, which belt drive is connected through a drive shaft to a take-off coupling in the front of the vehicle. In that belt drive the rear axes are coaxial with the secondary pulley of the belt drive. However, such belt drive cannot be combined with to engine to a compact drive unit because of the lay out of the drive line, whereby the input shaft of the transmission is positioned perpendicular with respect to the primary pulley.

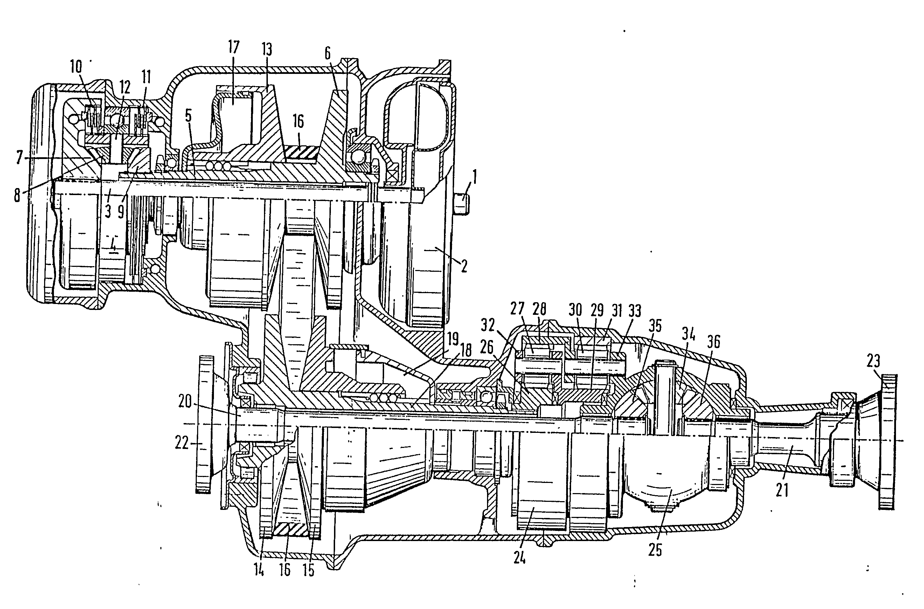

One embodiment of a drive unit for a car according to the invention will now be described, by way of example, with reference to the accompanying drawing.

The drive unit comprises a not shown engine and a transmission. The transmission is provided with an engine-connected drive shaft 1, which is connected through a hydraulic coupling 2 and a shaft 3 to a reversing mechanism 4. The reversing mechanism 4 is connected via a hollow shaft 5 mounted coaxially relative to shaft 3 to the primary pulley 6, 13 of a variable belt drive. In this embodiment the reversing mechanism comprises conical gear 7, 8 and 9 and the operation takes place by clutches 10 and 11 which are hydraulically controlled. If clutch 10 is engaged, the carrier 12 of conical gear 8 is fixed relative to conical gear 7, so that the entire conical gear assembly is blocked and the shafts 3 and 5 rotate jointly at equal speed and direction. If, on the other end, clutch 11 is engaged, the carrier of 12 of conical gear 8 is fixed relative to the transmission housing, whereby the shaft 12 of conical gear 8 is stationary and the conical gears 7 and 9, thereby the coaxial shafts 3 and 5 rotate at equal speed but oppositely directed. Thus the belt drive is driven in the forward or reverse direction.

The clutches 10 and 11 may also be used for driving off from standstill of the vehicle. In the embodiment shown, however, there is provided therefor a fluid coupling 2. Instead of said fluid coupling, also a different type of clutch (e.g. dry or wet plate clutch whether or not operated by centrifugal forces) or a hydraulic torque converter may be utilized.

The variable belt drive is provided with a primary pulley 6, 13 and a secondary pulley 14, 15 around which the driving belt 16 is applied. The primary pulley comprises a conical sheave 6 affixed to the hollow shaft 5 and a conical sheave 13 which is axially movable "under influence of fluid pressure in cylinder space 17. The secondary pulley comprises a conical sheave 14 affixed to the hollow shaft 18 and a conical sheave 15 axially movable under influence of fluid pressure in cylinder space 19. By controlling the fluid flow towards and/or the fluid pressure in cylinders 17 and 19, the transmission ratio and the tension of the driving belt can be controlled, as e.g. further explained in U.S. patent 4,152,947.

For obtaining the desired speed range of the output shafts 20 and 21, which via flanges 22 and 23 are connected to the wheels of the vehicle, the secondary pulley 14, 15 is connected via hollow shaft 18 to a planetary gear set 24 for driving a differential unit 25. The required reduction of the speed is achieved in that hollow shaft 18 is connected to the sun gear 26 of a first planetary set, whose carrier 32 of planet gears 27 and the planetary gear 28 are connected to respectively the sun gear 29 and the carrier 33 of planet gears 30 of a second planetary set. Of this second planetary set, the planetary gear 31 is fixed in the transmission housing and the carrier 33 of planetary gears 30 is connected to the differential unit 25. The planetary gear set 24 drives the differential unit 25 and thereby the output shafts 20 and 21 at a speed reduced relative to the secondary pulley 14, 15. The differential unit 25 is provided in a known manner with conical gears 34, 35, 36.

Both the reversing mechanism 7, 8, 9, and the differential unit 34, 35, 36 may be provided instead of with conical gears, also with an epicyclic gear set, in otherwise known manner.

## Claim

A drive unit for a frontwheel driven car, provided with an engine having a driven output shaft (1) which is positioned coaxially in respect of the primary pulley (6, 13) of an infinitely variable belt drive, the secondary pulley (14, 15) of said infinitely variable belt drive being connected through a speed reduction gear (26—33) and a differential unit (25) to two output shafts (20, 21) being positioned substantially in line in respect of each other and parallel to the driven output shaft of the engine, characterized in that the speed reduction gearing (26—33) and the differential unit (25) are positioned coaxially in respect of the secondary pulley (14, 15) with one of the output shafts (20) extending through the secondary pulley (14, 15), and in that a speed reversing mechanism (7—9) is connected to the driven output shaft (1) by a shaft (3) extending through the primary pulley (6—13), the ouptut (5) of said reversing mechanism (7—9) being connected to the primary pulley (6, 13).

## Patentanspruch

Antriebseinheit für ein Fahrzeug mit Frontantrieb, die mit einem Motor mit einer angetriebenen Abtriebswelle (1) ausgerüstet ist, die koaxial zur primären Riemenscheibe (6, 13) eines stufenlos verstellbaren Riementriebs angeordnet ist, dessen sekundäre Riemenscheibe (14, 15) durch ein Untersetzungsgetriebe (26—33) und eine Differentialeinheit (25) mit zwei Abtriebswellen (20, 21) verbunden ist, die im wesentlichen in einer Reihe in bezug aufeinander und parallel zu der angetriebenen Abtriebswelle des Motors angeordnet sind, dadurch gekennzeichnet, dass das Untersetzungsgetriebe (26—33) und die Differentialeinheit (25) koaxial zur sekundären Riemenscheibe (14, 15) mit einer der Abtriebswellen (20) sich durch die sekundäre Riemenscheibe (14, 15) hindurch erstreckend angeordnet ist, und dass ein Reversiermechanismus (7—9) mit der angetriebenen Abtriebswelle (1) durch eine sich durch die primäre Riemenscheibe (6, 13) hindurch erstreckende Welle (3) verbunden ist, und der Ausgang (5) des Reversiermechanismus (7—9) mit der primären Riemenscheibe (6, 13) verbunden ist.

## Revendication

Boîte de transmission pour véhicule à roues avant tractrices, comportant un moteur ayant un arbre de sortie mené (1) qui est positionné coaxialement par rapport à la poulie primaire (6, 13) d'un dispositif d'entraînement à courroie à variation de rapport de transmission infinie, la poulie secondaire (14, 15) dudit dispositif étant connectée par l'intermédiaire d'un système à engrenages de réduction de vitesse (26—33) et d'un ensemble différentiel (25) à deux arbres de sortie (20, 21) qui sont positionnés essentiellement en alignement l'un avec l'autre et parallèlement à l'arbre de sortie mené du moteur, caractérisée en ce que le système à engrenages de réduction de vitesse (26—33) et l'ensemble différentiel (25) sont positionnés coaxialement par rapport à la poulie secondaire (14, 15), avec l'un des arbres de sortie (20) s'étendant au travers de la poulie secondaire (14, 15), et en ce qu'un mécanisme d'inversion de vitesse (7—9) est relié à l'arbre de sortie mené (1) par un arbre (3) traversant la poulie primaire (6, 13), la sortie (5) dudit mécanisme d'inversion (7—9) étant reliée à la poulie primaire (6, 13).